# DEMANDE DE BREVET EUROPEEN

(11) **EP 3 543 064 A1**
(43) Date de publication de la demande: **25.09.2019**
(21) Numéro de dépôt: 19163355.1
(22) Date de dépôt: 18.03.2019
(51) Int. Cl.: B60N 2/015, B60N 2/24, B61D 17/08, B61D 33/00

(54) **VEHICULE DE TRANSPORT DE VOYAGEURS COMPORTANT UN ORGANE DE GUIDAGE POUR LA FIXATION DE SIEGES**

(30) Priorité: 19.03.2018 FR 1852323
(71) Demandeur: SNCF Mobilités, 93200 Saint-Denis (FR)
(72) Inventeur: PETAIN, Jean-Pierre, 67310 Romanswiller (FR); SAHIN, Ahmet, 67240 Bischwiller (FR); VILLON, Martial, 67300 Schiltigheim (FR)
(74) Mandataire: Argyma

(57) **Abrégé**

Un véhicule de transport de voyageurs comportant un châssis structural (1) s'étendant axialement selon un axe, une pluralité de sièges (S) et une pluralité d'organes de support de siège (2), chaque organe de support de siège (2) étant solidaire du châssis structural (1), le véhicule comportant en outre au moins un organe de guidage (3) sur lequel est solidarisé directement au moins un siège (S) et sur lequel est solidarisé directement au moins un organe de support de siège (2), l'organe de guidage (3) comportant une glissière (31), s'étendant longitudinalement selon l'axe du châssis structural (1) de manière à définir une pluralité de positions longitudinales de fixation de sièges (S).

## Description

### DOMAINE TECHNIQUE GENERAL ET ART ANTERIEUR

La présente invention concerne le domaine des véhicules pour le transport de voyageurs, en particulier, la fixation des sièges dans un train, un bus, un bateau, un avion, etc.

De manière classique, un matériel roulant ferroviaire pour le transport de voyageurs comporte une pluralité de véhicules ferroviaires reliés les uns aux autres. Chaque véhicule ferroviaire comprend une plateforme sur laquelle est montée une pluralité de sièges destinés au confort des voyageurs. Pour augmenter la capacité d'accueil d'un véhicule, on connaît dans l'art antérieur un véhicule étagé verticalement comprenant une plateforme supérieure et une plateforme inférieure qui comportent chacune une pluralité de sièges. Un tel véhicule étagé est connu de l'homme du métier sous désignation de véhicule « duplex ».

En pratique, un siège est fixé verticalement à une plateforme et latéralement à une paroi verticale du châssis structural d'un véhicule ferroviaire, désigné également « caisse » ou « chaudron ». De manière connue, un siège n'est pas fixé directement au châssis structural mais indirectement par l'intermédiaire d'un organe de support de siège qui est solidarisé audit châssis structural et sur lequel peut se fixer le siège.

Chaque organe de support de siège est fixé latéralement sur la face interne du châssis structural au moyen de rivets. A cet effet, le châssis structural doit être préalablement percé pour permettre la mise en place des tiges de rivet. Puis, des éléments de garnissage sont fixés à la face interne du châssis afin de masquer, au moins partiellement, l'organe de support de siège. La fixation des organes de support est simple à réaliser étant donné que le châssis structural est à nu.

Lors de la mise en service d'un véhicule ferroviaire, les sièges sont disposés selon une configuration initiale. Par exemple, les sièges peuvent être orientés dans le même sens, en vis à vis, regroupés en rangées parallèles ou en carré. La configuration dépend en particulier de la classe du véhicule. Aussi, un véhicule ayant une disposition du type « première classe » comporte moins de sièges qu'un véhicule ayant une disposition du type « deuxième classe ». Lors de la rénovation d'un véhicule ferroviaire, il est généralement nécessaire de disposer les sièges selon une nouvelle configuration qui est différente de la configuration initiale. Aussi, il est nécessaire pour les opérateurs de retirer les sièges et de modifier la position des organes de support de siège fixés au châssis structural.

La modification de la position des organes de support de siège présente de nombreux inconvénients. Tout d'abord, il est nécessaire de retirer les éléments de garnissage de la face interne du châssis structural afin de découvrir les organes de support de siège et les retirer. En particulier, il est nécessaire de déposer l'habillage de face, les plinthes, les supports de siège, les tôles diffuseurs, les ferrures de face, etc. Ensuite, il est nécessaire de réaliser de nouveaux perçages dans le châssis structural afin de fixer les organes de support de siège au moyen de rivets. Enfin, il est nécessaire d'adapter et de remettre en place les éléments de garnissage. De telles étapes sont longues et complexes à mettre en oeuvre.

En outre, des difficultés supplémentaires apparaissent pour un véhicule dont la masse doit être limitée, en particulier, un véhicule ferroviaire du type du duplex. En effet, afin de limiter sa masse, un véhicule ferroviaire du type duplex comporte un châssis structural en aluminium et non en acier comme cela est généralement le cas pour un véhicule ferroviaire à un niveau. La réalisation d'orifices pour la mise en place de rivets dans un châssis structural en aluminium est délicate étant donné qu'un perçage non conforme (précision insuffisante, mauvais alignement, etc.) ne peut pas être rattrapé. En effet, il n'est pas possible de réaliser un nouveau perçage à proximité du perçage non-conforme étant donné que cela abaisserait de manière excessive la résistance mécanique locale dudit châssis structural. Lors de la rénovation, le risque pour un opérateur de réaliser un perçage non-conforme est élevé compte tenu du nombre d'orifices à réaliser.

Pour éliminer cet inconvénient, il a été proposé par le brevet FR3045519 de prévoir un organe d'interface sur lequel est solidarisé directement au moins un siège et sur lequel est solidarisé directement au moins un organe de support de siège. L'organe d'interface remplit une fonction d'interface pour la fixation des sièges au châssis structural en permettant de définir une pluralité de positions longitudinales de fixation de sièges sans nécessiter d'usiner, ni de percer le châssis structural. Cette solution est avantageuse mais présente des contraintes pour l'aménagement du véhicule ferroviaire. En effet, des sièges peuvent être positionnés uniquement aux positions prédéterminées de l'organe d'interface. De plus, tout changement de configuration ultérieur impose des opérations lourdes pour enlever et remettre les éléments d'habillage.

L'invention a donc pour but d'éliminer au moins certains de ces inconvénients en proposant un nouveau véhicule de transport de voyageurs permettent de changer de configuration de manière rapide et pratique.

Bien que l'invention soit née à l'origine dans le domaine ferroviaire, elle s'applique à tout véhicule de transport de voyageurs (bus, bateau, avion, etc.).

On connaît dans l'art antérieur par la demande de brevet CA2595197 un véhicule pour le transport de voyageurs dont une paroi verticale intègre une plaque de montage sur laquelle peut être fixée un rail. Ce document traite de la construction d'un véhicule neuf et ne vise pas un véhicule de transport comportant une pluralité d'organes de support de siège préexistants.

### PRESENTATION GENERALE DE L'INVENTION

A cet effet, l'invention concerne un véhicule de transport de voyageurs comportant un châssis structural s'étendant axialement selon un axe, une pluralité de sièges et une pluralité d'organes de support de siège, chaque organe de support de siège étant solidaire du châssis structural.

Le véhicule est remarquable en ce qu'il comporte au moins un organe de guidage sur lequel est solidarisé directement au moins un siège et sur lequel est solidarisé directement au moins un organe de support de siège, l'organe de guidage comportant une glissière, s'étendant longitudinalement selon l'axe du châssis structural de manière à définir une pluralité de positions longitudinales de fixation de sièges.

De manière avantageuse, l'organe de guidage remplit une fonction d'interface pour la fixation des sièges au châssis structural en permettant de définir une pluralité de positions longitudinales de fixation de sièges sans nécessiter d'usiner, ni de percer le châssis structural. La glissière permet d'offrir une grande flexibilité de fixation selon la direction longitudinale. Les positions longitudinales sont déterminées de manière continue et non espacées d'un pas déterminé comme dans l'art antérieur. De manière avantageuse, l'organe de guidage peut être monté directement sur les organes de support de siège du châssis structural, ce qui limite la durée du changement de configuration sans perçage du châssis structural. Une telle invention est avantageuse au regard du brevet FR3045519 qui requiert le montage de nombreux organes additionnels. De manière avantageuse, l'organe de guidage peut être monté en lieu et place d'une plinthe selon l'art antérieur. Enfin, un tel organe de guidage possède une masse réduite, ce qui est avantageux dans le domaine du transport.

De préférence, l'organe de guidage comporte au moins une paroi inférieure d'habillage s'étendant en-dessous de la glissière. L'intégration d'une paroi d'habillage permet d'accélérer un changement de configuration de sièges en limitant le nombre d'éléments à monter.

De manière préférée, la paroi inférieure d'habillage comporte une pluralité d'ouvertures de ventilation, de préférence, alignées longitudinalement selon l'axe. Ainsi, l'organe de guidage remplit également une fonction de ventilation intégrée.

De préférence, la paroi inférieure d'habillage et la glissière forment un ensemble monobloc, ce qui diminue le coût de fabrication et de montage.

Selon un autre aspect, l'organe de guidage comporte au moins une paroi supérieure d'habillage s'étendant au-dessus de la glissière. L'intégration d'une paroi d'habillage permet d'accélérer un changement de configuration de sièges en limitant le nombre d'éléments à monter.

De manière préférée, la paroi supérieure d'habillage et la glissière forment un ensemble monobloc, ce qui diminue le coût de fabrication et de montage.

De préférence, l'organe de support de siège comporte un élément de châssis solidaire du châssis structural et un élément de montage solidaire de la glissière. Un tel organe de support de siège permet avantageusement de bloquer un élément d'habillage auxiliaire entre les deux éléments. De préférence encore, l'élément de montage est fixé à l'élément de châssis par au moins un premier organe de fixation.

De préférence encore, l'élément de montage est configuré pour être connecté directement à un siège en configuration initiale de montage.

De préférence, le châssis structural est en aluminium et ne doit pas subir des perçages ou des usinages pour recevoir une nouvelle configuration de sièges.

De manière préférée, l'élément de montage est fixé à la glissière par au moins un deuxième organe de fixation.

Selon un aspect de l'invention, le siège comporte un organe d'indexation monté coulissant dans la glissière de l'organe de guidage afin de pouvoir choisir librement la position du siège dans le véhicule ferroviaire. De préférence, le siège comporte un écrou de serrage configuré pour bloquer l'organe d'indexation dans la glissière à une position longitudinale déterminée.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en coupe transversale d'un véhicule ferroviaire du type duplex selon l'invention,
- la figure 2 est une représentation en perspective de la fixation latérale du siège avec un organe de guidage selon l'invention et
- les figures 3, 4 et 5 sont des représentations en coupe d'une fixation latérale d'un siège selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

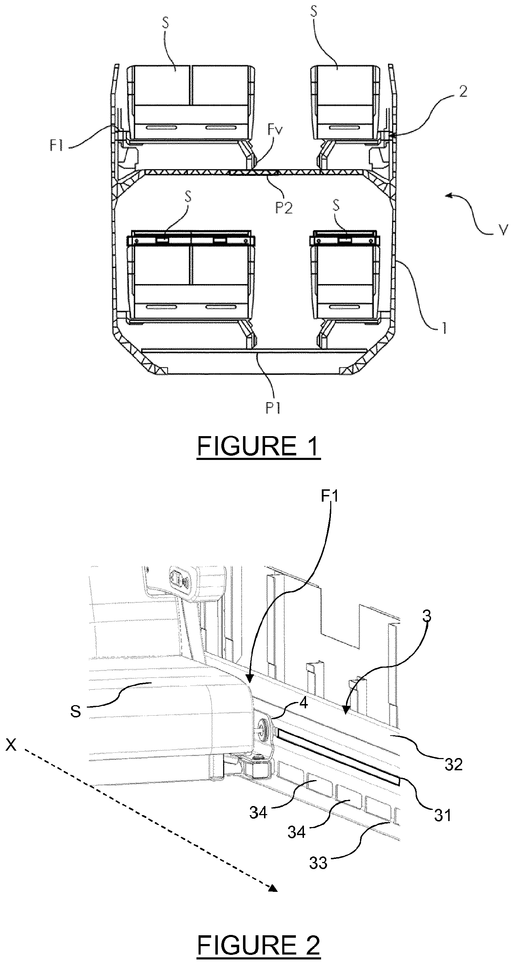

En référence à la figure 1, il est représenté de manière schématique un véhicule ferroviaire pour le transport de voyageurs V, du type duplex, comprenant une plateforme inférieure P1 et une plateforme supérieure P2 qui comportent chacune une pluralité de sièges S. Par siège S, on entend un module de siège pouvant accueillir une ou plusieurs personnes comme illustré à la figure 1.

De manière connue, le véhicule ferroviaire V comporte un châssis structural 1 s'étendant axialement selon un axe X comme illustré à la figure 2. Dans cet exemple, le châssis structural 1 est réalisé en aluminium de manière à posséder une masse réduite. Néanmoins, il va de soi que d'autres matériaux pourraient convenir, en particulier, de l'acier. Le châssis structural 1 est également connu de l'homme du métier sous la désignation de « caisse » ou « chaudron ».

Comme illustré à la figure 1, chaque siège S est fixé verticalement selon un point de fixation vertical Fv à une plateforme et latéralement selon un point de fixation latérale F1 à une paroi verticale du châssis structural 1. Chaque siège S n'est pas fixé directement au châssis structural 1 mais indirectement par l'intermédiaire d'un organe de support de siège 2 qui est solidarisé audit châssis structural 1 et sur lequel peut se fixer le siège S. Chaque organe de support de siège 2 est fixé latéralement sur une face interne du châssis structural 1. Ainsi, le véhicule ferroviaire V comporte une pluralité d'organes de support de siège 2 qui sont décalés longitudinalement selon l'axe X du châssis structural 1.

Selon l'invention, en référence aux figures 2 à 5, le véhicule ferroviaire V comporte un organe de guidage 3 sur lequel est solidarisé directement au moins un siège S et sur lequel est solidarisé directement au moins un organe de support de siège 2. L'organe de guidage 3 comporte une glissière 31, s'étendant longitudinalement selon l'axe X du châssis structural 1. Ainsi, les sièges S ne sont plus solidarisés directement aux organes de support de siège 2, dont les positions sont fixes par rapport au châssis structural 1, mais de manière indirecte par l'intermédiaire d'un organe de guidage 3 qui permet d'offrir plus de flexibilité dans le positionnement des sièges S. De manière avantageuse, les positions longitudinales des sièges S sont définies de manière continue, ce qui offre une plus grande liberté pour la configuration d'un véhicule ferroviaire V.

Dans cet exemple, le véhicule ferroviaire V comporte, pour chaque plateforme P1, P2, deux organes de guidage 3 disposés latéralement et s'étendant sensiblement sur toute la longueur du véhicule ferroviaire V. Autrement dit, chaque organe de guidage 3 est solidarisé à une pluralité d'organes de support de siège 2 et à une pluralité de sièges S.

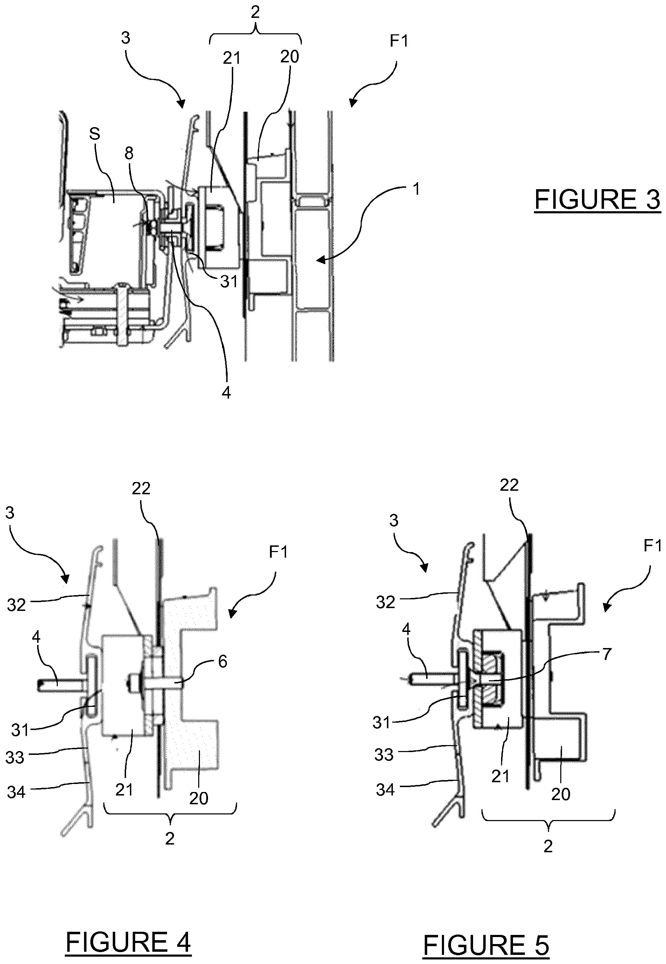

Comme illustré aux figures 2 à 5, l'organe de guidage 3 s'étend longitudinalement selon l'axe X du châssis structural 1. En référence aux figures 4 et 5, l'organe de guidage 3 comporte une glissière 31 se présentant sous la forme d'une fente ayant une section en T de manière à recevoir une pluralité d'organes d'indexation 4 respectivement solidaires d'une pluralité de sièges S. Autrement dit, la position de chaque siège S peut être déterminée de manière pratique, rapide et sans contrainte en faisant coulisser les organes d'indexation 4 aux positions désirées.

Comme illustré à la figure 3, le siège S comporte un écrou de serrage 8 configuré pour coopérer avec une portion filetée d'un organe d'indexation 4 de manière à venir bloquer le siège S à la position longitudinale souhaitée. De manière alternative, l'organe d'indexation 4 comporte une portion taraudée pour coopérer avec une portion filetée d'une vis de fixation du siège S. Dans cette forme de réalisation, comme illustré aux figures 2, 4 et 5, l'organe de guidage 3 comporte en outre une paroi supérieure d'habillage 32 s'étendant au-dessus de la glissière 31 et une paroi inférieure d'habillage 33 s'étendant en-dessous de la glissière 31. Dans cet exemple, la glissière 31, la paroi supérieure d'habillage 32 et la paroi inférieure d'habillage 33 forment un ensemble monobloc. Autrement dit, l'organe de guidage 3 remplit une fonction de guidage/fixation d'un siège S mais également une fonction d'habillage, ce qui permet de limiter le nombre d'organes devant être montés dans un véhicule ferroviaire V et accélère le changement de configuration des sièges. Il va de soi que l'invention s'applique également à un organe de guidage 3 comportant une ou plusieurs parois d'habillages 32, 33 indépendantes.

Dans cet exemple, l'organe de guidage 3 est réalisé en alliage d'aluminium. La paroi supérieure d'habillage 32 possède une hauteur verticale comprise entre 0 cm et 40 cm tandis que la paroi inférieure d'habillage 33 possède une hauteur verticale comprise entre 0 cm et 10 cm de manière à masquer l'environnement des organes de support de siège 2 sur lesquels est monté l'organe de guidage 3.

En référence à la figure 2, un canal de ventilation est formé à l'arrière de la paroi inférieure d'habillage 33. La paroi inférieure d'habillage 33 comporte une pluralité d'ouvertures de ventilation 34 qui sont alignées longitudinalement selon l'axe X, en particulier, à égale distance les unes des autres pour permettre à de l'air neuf de sortir du canal de ventilation. De telles ouvertures de ventilation 34 permettent d'apporter de l'air neuf dans le véhicule ferroviaire V. Contrairement à l'art antérieur, il n'est pas nécessaire de prévoir un organe de ventilation dédié. L'organe de guidage 3 remplit de manière avantageuse une fonction de ventilation.

En référence dorénavant aux figures 3 à 5, l'organe de support de siège 2 comporte un élément de châssis 20 solidaire du châssis structural 1 et un élément de montage 21 solidaire de la glissière 31. L'élément de montage 21 s'étendant entre l'élément de châssis 20 et la glissière 31.

Un tel élément de montage 21 permet de faciliter la liaison avec l'élément de châssis 20 tout en limitant les contraintes pour la glissière 31. Autrement, les contraintes de fixation sont déportées dans l'élément de montage 21 pour que la glissière 31 réalise un guidage optimal et permette un habillage.

Comme illustré à la figure 4, l'élément de montage 21 est fixée à l'élément de châssis 20 par l'intermédiaire d'une ou plusieurs premières vis de fixation 6 afin de les solidariser ensemble. De manière préférée, un organe d'étanchéité est fixé à l'élément de châssis 20 afin de former une étanchéité pour le canal de ventilation.

De manière analogue, en référence à la figure 5, l'élément de montage 21 est fixé à la glissière 31 par l'intermédiaire d'une ou plusieurs deuxièmes vis de fixation 7 afin de les solidariser ensemble. De manière préférée, l'élément de montage 21 était un organe de montage initial d'un siège S dans la configuration initiale du véhicule ferroviaire. Autrement dit, il suffit à un opérateur de venir fixer l'organe de guidage 3 dans l'élément de montage 21 pour permettre un positionnement libre d'un siège S tout en permettant un habillage esthétique. De manière avantageuse, le châssis structural 1 n'est pas affecté par la modification.

### Exemple d'un procédé de modification de la position des sièges dans un véhicule ferroviaire

Il va être dorénavant présenté l'installation de sièges S dans un véhicule ferroviaire V selon une nouvelle configuration au cours d'une rénovation dudit véhicule ferroviaire V.

Le véhicule ferroviaire V comporte des organes de support de siège 2 qui sont solidarisés aux parois verticales du châssis structural 1 à des positions de fixation longitudinales déterminées et qui ne correspondent pas nécessairement à la nouvelle disposition des sièges S.

Tout d'abord, un opérateur retire des éléments de garnissage pour dégager les organes de support de siège 2. Ensuite, l'opérateur positionne l'organe de guidage 3 longitudinalement selon l'axe du châssis structural 1 et le fixe aux éléments de montage 21 des organes de support de siège 2 qui étaient utilisées dans la configuration initiale pour fixer les sièges S.

L'organe de guidage 3 est fixé aux organes de support de siège 2 aux moyens de deuxièmes vis de fixation 7, en particulier au nombre de deux. Une telle fixation est simple à réaliser par un opérateur étant donné qu'elle n'affecte pas le châssis structural 1 qui est en aluminium.

De manière avantageuse, des organes d'indexation 4 sont montés dans la glissière 31 de l'organe de guidage 3 de manière à permettre le montage des sièges S. Comme l'organe de guidage 3 comporte des parois d'habillage intégrées 32, 33, il n'est pas nécessaire pour l'opérateur de les monter séparément. De plus, en cas de modification ultérieure de la position des sièges S, ceux-ci pourront être déplacés de manière pratique à une autre position longitudinale de l'organe de guidage 3. Contrairement à l'art antérieur, les positions longitudinales ne sont pas fixes et écartées d'un pas déterminé mais définies de manière continue pour procurer une grande liberté de positionnement. Une fois le siège S positionné, l'écrou de serrage 8 du siège S est serré pour verrouiller la position.

Grâce à l'invention, le temps de rénovation d'un véhicule ferroviaire V est réduit. Par ailleurs, le châssis structural 1 est préservé, ce qui évite la formation de points de faiblesse. Le coût de rénovation est par ailleurs considérablement réduit.

La mise en place d'un tel organe de guidage 3 permet en outre d'augmenter le débit d'air dans le véhicule via les ouvertures de ventilation 34 qui sont intégrées, ce qui représente un meilleur confort thermique pour les passagers.

L'invention a été présentée pour un véhicule ferroviaire du type duplex mais elle s'applique à tout véhicule ferroviaire de transport de voyageurs. De manière générale, l'invention s'applique à tout type de véhicule de transport de voyageurs, en particulier, un bus, un avion, un bateau ou analogue.

De manière préférée, le véhicule ferroviaire comporte au moins une glissière montée dans la plateforme de manière à pouvoir régler la position longitudinale de la fixation verticale Fv. Ainsi, le siège S peut être coulissé dans son ensemble selon la position longitudinale puis fixer latéralement et verticalement.

## Revendications

1. Véhicule de transport de voyageurs (V) comportant un châssis structural (1) s'étendant axialement selon un axe (X), une pluralité de sièges (S) et une pluralité d'organes de support de siège (2), chaque organe de support de siège (2) étant solidaire du châssis structural (1), véhicule (V) **caractérisé en ce qu'**il comporte en outre au moins un organe de guidage (3) sur lequel est solidarisé directement au moins un siège (S) et sur lequel est solidarisé directement au moins un organe de support de siège (2), l'organe de guidage (3) comportant une glissière (31), s'étendant longitudinalement selon l'axe (X) du châssis structural (1) de manière à définir une pluralité de positions longitudinales de fixation de sièges (S).

2. Véhicule selon la revendication 1, dans lequel l'organe de guidage (3) comporte au moins une paroi inférieure d'habillage (33) s'étendant en-dessous de la glissière (31).

3. Véhicule selon la revendication 2, dans lequel la paroi inférieure d'habillage (33) comporte une pluralité d'ouvertures de ventilation (34), de préférence, alignées longitudinalement selon l'axe (X).

4. Véhicule selon l'une des revendications 2 à 3, dans lequel la paroi inférieure d'habillage (33) et la glissière (31) forment un ensemble monobloc.

5. Véhicule selon l'une des revendications 1 à 4, dans lequel l'organe de guidage (3) comporte au moins une paroi supérieure d'habillage (32) s'étendant au-dessus de la glissière (31).

6. Véhicule selon la revendication 5, dans lequel la paroi supérieure d'habillage (32) et la glissière (31) forment un ensemble monobloc.

7. Véhicule selon l'une des revendications 1 à 6, dans lequel l'organe de support de siège (2) comporte un élément de châssis (20) solidaire du châssis structural (1) et un élément de montage (21) solidaire de la glissière (31).

8. Véhicule selon la revendication 7, dans lequel l'élément de montage (21) est fixé à l'élément de châssis (20) par au moins un premier organe de fixation (6).

9. Véhicule selon l'une des revendications 7 et 8, dans lequel l'élément de montage (21) est fixé à la glissière par au moins un deuxième organe de fixation (7).

10. Véhicule selon l'une des revendications 1 à 9, dans lequel le siège (S) comporte un organe d'indexation (4) monté coulissant dans la glissière (31) de l'organe de guidage (3).
